# EUROPEAN PATENT APPLICATION

(11) **EP 4 733 922 A1**
(43) Date of publication of application: **29.04.2026**
(21) Application number: 25190915.6
(22) Date of filing: 22.07.2025
(51) Int. Cl.: G06F 3/06, G06F 12/02

(54) **STORAGE DEVICE AND OPERATING METHOD OF STORAGE DEVICE**

(30) Priority: 23.10.2024 KR 20240145963; 16.06.2025 US 202519239146
(71) Applicant: Samsung Electronics Co., Ltd., Suwon-si, Gyeonggi-do 16677 (KR)
(72) Inventor: LEE, Seunghan, 16677 Suwon-si, Gyeonggi-do (KR); UHM, Junyong, 16677 Suwon-si, Gyeonggi-do (KR); JO, Jeongmin, 16677 Suwon-si, Gyeonggi-do (KR)
(74) Representative: Kuhnen & Wacker Patent- und Rechtsanwaltsbüro PartG mbB

(57) **Abstract**

A storage device includes a nonvolatile memory device, and a memory controller that controls the nonvolatile memory device. The memory controller performs a write operation, a read operation, and a trim operation in response to a command of an external host device. The memory controller stores a trim performance table including a trim response time of a trim command. The memory controller performs the trim operation in response to the trim command, and transmits a trim response to the external host device after the trim response time passes, even though the trim operation is completed. The memory controller transmits a change request of the trim response time to the external host device in response to detecting a trim performance change condition.

## Description

### CROSS-REFERENCE TO RELATED APPLICATIONS

### BACKGROUND

Embodiments of the present disclosure described herein relate to an electronic device, and more particularly, relate to a storage device capable of adjusting performance dynamically and an operating method of the storage device.

A storage device may include a nonvolatile memory device and a memory controller. The memory controller may write data in the nonvolatile memory device and may read data from the nonvolatile memory device.

A host device may manage the storage space of the storage device by using a file system. The host device may mark partial data of the file system as invalid data such that the data written in the storage device are processed as being deleted.

However, the data marked as being deleted only in the file system may be identified still as valid data in the storage device. The memory controller may perform the background operation, for example, garbage collection for valid data written in the nonvolatile memory device as well as the data deleted in the file system.

To prevent the memory controller from performing the unnecessary background operation for the data deleted in the file system, the host device may transmit a trim command to the memory controller. The trim command may include information about the data deleted on the file system. In response to the trim command, the memory controller may process the data deleted on the file system as invalid data. A memory block including the invalid data may be erased by garbage collection.

### SUMMARY

Embodiments of the present disclosure provide a storage device capable of adjusting performance dynamically and an operating method of the storage device.

According to an embodiment, a storage device includes a nonvolatile memory device, and a memory controller that controls the nonvolatile memory device. The memory controller performs a write operation, a read operation, and a trim operation in response to a command of an external host device. The memory controller stores a trim performance table including a trim response time of a trim command. The memory controller performs the trim operation in response to the trim command, and transmits a trim response to the external host device after the trim response time passes, even though the trim operation is completed. The memory controller transmits a change request of the trim response time to the external host device in response to detecting a trim performance change condition.

According to an embodiment, a computing device driving a plurality of virtual machines includes a plurality of storage devices, and an integrated circuit that manages accesses of the plurality of virtual machines to the plurality of storage devices. Each of the plurality of storage devices stores a trim performance table including a trim response time of a trim operation, and transmits a change request of the trim response time to the integrated circuit in response to detecting a trim performance change condition. The integrated circuit changes a trim response time of each of the plurality of storage devices in response to the change request. Each of the plurality of storage devices transmits a response to a trim command to the integrated circuit based on the trim response time.

According to an embodiment, an operating method of a storage device includes storing, at the storage device, a first trim response time, detecting, at the storage device, a trim performance change condition, transmitting, at the storage device, a change request of a trim response time to an external host device in response to detecting the trim performance change condition, receiving, at the storage device, a second trim response time corresponding to the change request from the external host device, receiving, at the storage device, a trim command from the external host device, performing, at the storage device, a trim operation in response to the trim command, and transmitting, at the storage device, a trim response to the external host device based on the second trim response time.

### BRIEF DESCRIPTION OF THE FIGURES

The above and other objects and features of the present disclosure will become apparent by describing in detail embodiments thereof with reference to the accompanying drawings.
FIG. 1 illustrates a computing device according to an embodiment of the present disclosure.
FIG. 2 illustrates an operating method of a computing device according to an embodiment of the present disclosure.
FIG. 3 illustrates a first trim performance table or a second trim performance table according to an embodiment of the present disclosure.
FIG. 4 illustrates a method in which a storage device according to an embodiment of the present disclosure detects a trim performance change condition.
FIG. 5 illustrates an example in which trim performance is increased depending on an erase count in a storage device.
FIG. 6 illustrates another method in which a storage device according to an embodiment of the present disclosure detects a trim performance change condition.
FIG. 7 illustrates an example in which trim performance is adjusted depending on a temperature in a storage device.
FIG. 8 illustrates another method in which a storage device according to an embodiment of the present disclosure detects a trim performance change condition.
FIG. 9 illustrates an example in which trim performance is adjusted depending on the number of free blocks in a storage device.
FIG. 10 illustrates another method in which a storage device according to an embodiment of the present disclosure detects a trim performance change condition.
FIG. 11 illustrates an example in which trim performance is adjusted depending on a write and read (WR) ratio in a storage device.
FIG. 12 illustrates a computing device according to another embodiment of the present disclosure.
FIG. 13 is a block diagram illustrating a nonvolatile memory device according to an embodiment of the present disclosure.
FIG. 14 is a block diagram illustrating a system according to an embodiment of the present disclosure.

### DETAILED DESCRIPTION

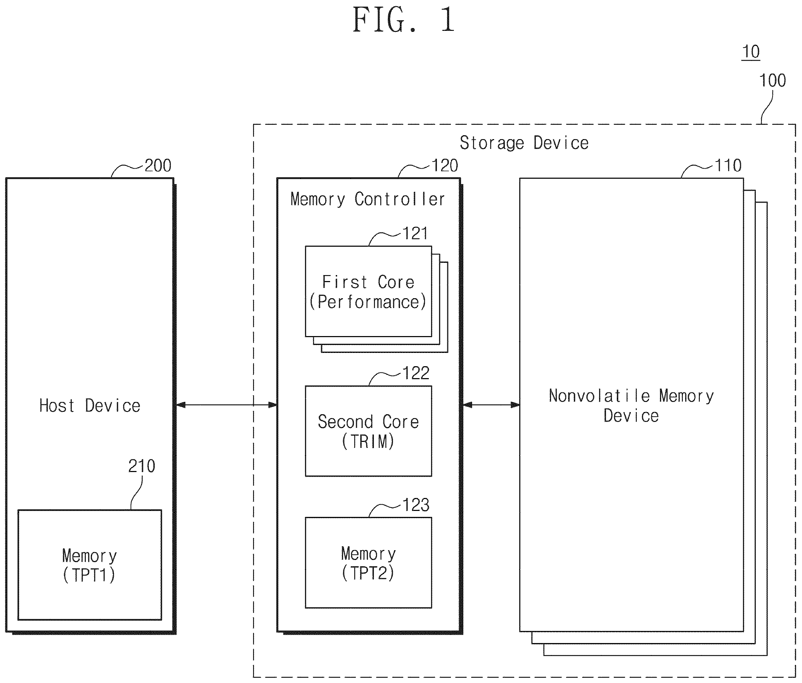

FIG. 1 illustrates a computing device 10 according to an embodiment of the present disclosure. Referring to FIG. 1, the computing device 10 may include a storage device 100 and a host device 200.

The storage device 100 may perform the write operation, the read operation, and the trim operation in response to a command received from the host device 200. The trim operation may include an operation of processing data deleted on the file system as invalid data or erasing the deleted data.

The storage device 100 may include one or more nonvolatile memory devices 110 and a memory controller 120. The one or more nonvolatile memory devices 110 may include at least one of various nonvolatile memory devices such as a flash memory device, a phase-change memory device, a magnetic memory device, and a ferroelectric memory device.

The memory controller 120 may perform the write operation, the read operation, and the erase operation for the nonvolatile memory devices 110 depending on a request of the host device 200 or as a background operation. The memory controller 120 may perform various operations such as the trim operation, the garbage collection operation, and the wear leveling operation by using at least one of the write operation, the read operation, and the erase operation or a combination of at least two thereof.

The memory controller 120 may include first cores 121, a second core 122, a memory 123. The first cores 121 may include a performance core that adjusts the performance of the input operation and the output operation. For example, each of the first cores 121 may adjust the performance ratio (or processing ratio) of the input operation accompanied by the write operation and the output operation accompanied by the read operation. The performance ratio may be managed based on the number of commands processed per unit time, that is, the number of input or write commands or the number of output or read commands.

The second core 122 may include a trim core that adjusts the performance of the trim operation. The memory 123 may store a second trim performance table TPT2. For example, the second core 122 may read the second trim performance table TPT2 from the memory 123 and may adjust or limit the performance of the trim operation based on the second trim performance table TPT2.

The host device 200 may include a memory 210. The memory 210 may store a first trim performance table TPT1. For example, the first trim performance table TPT1 may include a trim response time. The host device 200 may provide the first trim performance table TPT1 to the memory controller 120. The first cores 121 or the second core 122 of the memory controller 120 may store the first trim performance table TPT1 in the memory 123 as the second trim performance table TPT2. Like the first trim performance table TPT1, the second trim performance table TPT2 may include the trim response time.

The second core 122 may receive the trim command from the host device 200 and may perform the trim operation in response to the trim command. Even though the trim operation is completed, the second core 122 may transmit a trim response to the host device 200 after the trim response time of the second trim performance table TPT2 passes. The performance with which the storage device 100 performs the trim operation may be adjusted (or limited) by setting (or limiting) the trim response time that is used for the second core 122 to transmit the trim response to the host device 200.

According to an embodiment of the present disclosure, the performance ratio of the write operation, the read operation, and the trim operation may be adjusted by the first cores 121 and the second core 122, and the demand on the performance ratio of the host device 200 may be satisfied.

When the feature or environment of the storage device 100 changes, the first cores 121 or the second core 122 may request the host device 200 to change the first trim performance table TPT1. The host device 200 may change the first trim performance table TPT1 and may provide the changed first trim performance table TPT1 to the memory controller 120. The memory controller 120 may store the received first trim performance table TPT1 in the memory 123 as the second trim performance table TPT2. The memory controller 120 may transmit the trim response to the host device 200, based on the trim response time of the second trim performance table TPT2.

According to an embodiment of the present disclosure, when the feature or environment of the storage device 100 changes, the storage device 100 and the host device 200 may change the trim response time of the first trim performance table TPT1 and the second trim performance table TPT2. Accordingly, even though the feature or environment of the storage device 100 changes, the performance ratio of the write operation, the read operation, and the trim operation of the storage device 100 may be maintained, and the demand on the performance ratio of the host device 200 may be satisfied.

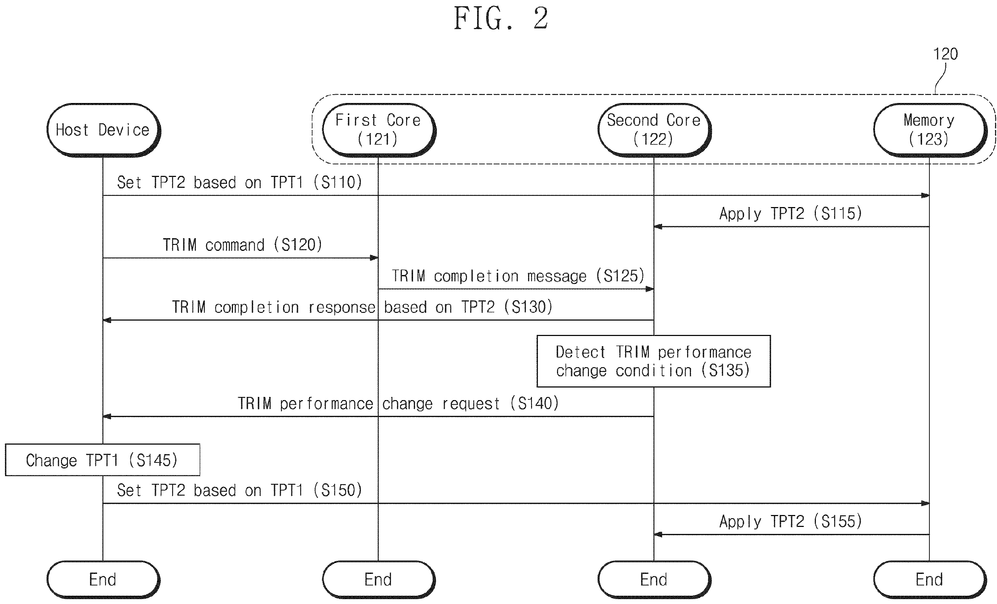

FIG. 2 illustrates an operating method of the computing device 10 according to an embodiment of the present disclosure. Referring to FIGS. 1 and 2, in operation S110, the host device 200 may set the second trim performance table TPT2 in the memory 123 of the memory controller 120 based on the first trim performance table TPT1. For example, the host device 200 may transmit a command including the first trim performance table TPT1 to the first cores 121 or the second core 122 of the memory controller 120. In response to the command, the memory controller 120 may store the first trim performance table TPT1 in the memory 123 as the second trim performance table TPT2.

In operation S115, the second core 122 may read the second trim performance table TPT2 from the memory 123 and may apply the second trim performance table TPT2 to the trim operation.

In operation S120, the host device 200 may transmit the trim command to the first cores 121 (or any one of the first cores 121) of the memory controller 120. The first cores 121 (or any one of the first cores 121) may perform the trim operation in response to the trim command. For example, the first cores 121 (or any one of the first cores 121) may extract a logical address list included in the trim command. The first cores 121 (or any one of the first cores 121) may perform an operation of invalidating data corresponding to the logical address list or an operation of erasing data associated with the logical address list (e.g., data of the logical address list or data sharing a memory block of the logical address list).

When the trim operation is completed, in operation S125, the first cores 121 (or any one of the first cores 121) of the memory controller 120 may transmit a trim completion message to the second core 122.

In operation S130, the second core 122 of the memory controller 120 may transmit a trim completion response (or the trim response) to the host device 200 based on the second trim performance table TPT2. For example, when the trim response time of the second trim performance table TPT2 passes after the trim command is received or when the trim response time of the second trim performance table TPT2 passes after the trim completion message is received, the second core 122 may transmit the trim completion response to the host device 200.

In operation S135, the second core 122 of the memory controller 120 may detect a trim performance change condition. For example, the detection of the trim performance change condition may include detecting whether a change of the feature or environment of the storage device 100 satisfies a given condition. For example, the change of the feature or environment may include a change of elements affecting the performance (e.g., speed) of the trim operation.

When the trim performance change condition is detected, the second core 122 of the memory controller 120 may transmit a trim performance change request to the host device 200. For example, the second core 122 may transmit the trim performance change request to the host device 200 in the form of a response to any one of various commands such as a write command, a read command, and a trim command (i.e., through input and output lines). As another example, the second core 122 may transmit the trim performance change request to the host device 200 through separate lines separated from the input and output lines.

In an embodiment, the second core 122 may transmit the trim performance change request including information of the feature (or the change of the feature) of the storage device 100 and information of the environment (or the change of the environment) of the storage device 100 to the host device 200. As another example, the second core 122 may determine a target value of the trim response time and may transmit the trim performance change request including the target value to the host device 200.

In operation S145, the host device 200 may change the first trim performance table TPT1. For example, the host device 200 may determine a new trim response time based on the information of the feature (or the change of the feature) of the storage device 100 and the information of the environment (or the change of the environment) of the storage device 100 included in the trim performance change request. As another example, the host device 200 may determine the new trim response time based on the target value of the trim response time included in the trim performance change request.

In operation S150, the host device 200 may set the second trim performance table TPT2 including the new trim response time in the memory 123 of the memory controller 120 based on the first trim performance table TPT1 including the new trim response time. For example, the host device 200 may transmit a command including the first trim performance table TPT1 to the first cores 121 or the second core 122 of the memory controller 120. In response to the command, the memory controller 120 may store the first trim performance table TPT1 in the memory 123 as the second trim performance table TPT2.

In operation S155, the second core 122 may read the second trim performance table TPT2 including the new trim response time from the memory 123 and may apply the second trim performance table TPT2 to the trim operation.

As described above, as the feature or environment associated with the trim operation of the storage device 100 changes, the storage device 100 may request the host device 200 to change the trim response time. The host device 200 may change the trim response time in response to the request of the storage device 100. Accordingly, even though the feature or environment of the storage device 100 changes, the computing device 10 may maintain the performance ratio of the write operation, the read operation, and the trim operation of the storage device 100 and may satisfy the demand on the performance ratio of the host device 200.

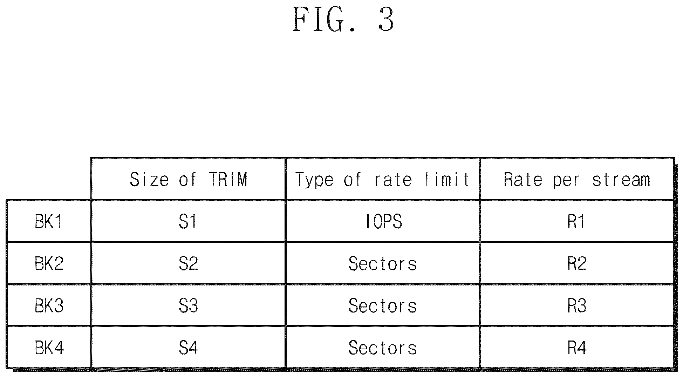

FIG. 3 illustrates the first trim performance table TPT1 or the second trim performance table TPT2 according to an embodiment of the present disclosure. Referring to FIGS. 1, 2, and 3, the first trim performance table TPT1 or the second trim performance table TPT2 may include a plurality of buckets. The plurality of buckets may correspond to different response times and may correspond to different trim sizes.

For example, a first bucket BK1 may correspond the trim operation of a first size S1. The first size S1 may refer to a size of data targeted for the trim operation that the storage device 100 has to process in response to the trim command. A type of a ratio limit of the first bucket BK1 may be IOPS (Input/Output Operation Per Second). The first bucket BK1 may correspond to a first rate R1 for the trim operation. The first rate R1 may correspond to the trim response time that is determined based on a unit of the type of the ratio limit and is designated for (e.g., minimally designated for) the second core 122 of the memory controller 120 to transmit the trim completion response.

In an embodiment, the first rate R1 may be determined for each of streams that are set to the storage device 100. The streams may indicate groups of data correlated from among data to be written in the storage device 100. The streams may be set by the host device 200 or may be identified by the storage device 100. In an embodiment, the storage device 100 may manage the performance of the trim operation (or the ratio of the trim operation) corresponding to the first bucket BK1 based on the first rate R1, for each stream.

For example, the first size S1 may be 4 KB to 16 KB, and the first rate R1 may be 10000 OPS/s. When the host device 200 transmit the trim command for data corresponding to the first size S1 to the memory controller 120, the memory controller 120 may perform the trim operation. The second core 122 of the memory controller 120 may compare a completion time point of the trim operation and the first rate R1 and may adjust the timing to transmit the trim completion response to the host device 200.

For example, when the completion time point of the trim operation is earlier than a time point expected when the trim operation is performed based on the first rate R1, the second core 122 may transmit the trim completion response to the host device 200 based on the first rate R1.

For example, a second bucket BK2 may correspond the trim operation of a second size S2. The second size S2 may refer to a size of data targeted for the trim operation that the storage device 100 has to process in response to the trim command. A type of a ratio limit of the second bucket BK2 may be sectors. The second bucket BK2 may correspond to a second rate R2 for the trim operation. The second rate R2 may correspond to the trim response time that is determined based on a unit of the type of the ratio limit and is designated for (e.g., minimally designated for)l the second core 122 of the memory controller 120 to transmit the trim completion response.

In an embodiment, the second rate R2 may be determined for each of streams that are set in the storage device 100. In an embodiment, the storage device 100 may manage the performance of the trim operation (or the ratio of the trim operation) corresponding to the second bucket BK2 based on the second rate R2, for each stream.

For example, the second size S2 may be 16 KB to 10 MB, and the second rate R2 may be 156MiB/s. When the host device 200 transmit the trim command for data corresponding to the second size S2 to the memory controller 120, the memory controller 120 may perform the trim operation. The second core 122 of the memory controller 120 may compare a completion time point of the trim operation and the second rate R2 and may adjust the timing to transmit the trim completion response to the host device 200.

For example, when the completion time point of the trim operation is earlier than a time point expected when the trim operation is performed based on the second rate R2, the second core 122 may transmit the trim completion response to the host device 200 based on the second rate R2.

For example, a third bucket BK3 may correspond the trim operation of a third size S3. The third size S3 may refer to a size of data targeted for the trim operation that the storage device 100 has to process in response to the trim command. A type of a ratio limit of the third bucket BK3 may be sectors. The third bucket BK3 may correspond to a third rate R3 for the trim operation. The third rate R3 may correspond to the trim response time that is determined based on a unit of the type of the ratio limit and is designated for (e.g., minimally designated for) the second core 122 of the memory controller 120 to transmit the trim completion response.

In an embodiment, the third rate R3 may be determined for each of streams that are set in the storage device 100. In an embodiment, the storage device 100 may manage the performance of the trim operation (or the ratio of the trim operation) corresponding to the third bucket BK3 based on the third rate R3, for each stream.

For example, the third size S3 may be 10 MB to 2 GB, and the third rate R3 may be 65GiB/s. When the host device 200 transmit the trim command for data corresponding to the third size S3 to the memory controller 120, the memory controller 120 may perform the trim operation. The second core 122 of the memory controller 120 may compare a completion time point of the trim operation and the third rate R3 and may adjust the timing to transmit the trim completion response to the host device 200.

For example, when the completion time point of the trim operation is earlier than a time point expected when the trim operation is performed based on the third rate R3, the second core 122 may transmit the trim completion response to the host device 200 based on the third rate R3.

For example, a fourth bucket BK4 may correspond the trim operation of a fourth size S4. The fourth size S4 may refer to a size of data targeted for the trim operation that the storage device 100 has to process in response to the trim command. A type of a ratio limit of the fourth bucket BK4 may be sectors. The fourth bucket BK4 may correspond to a fourth rate R4 for the trim operation. The fourth rate R4 may correspond to the trim response time that is determined based on a unit of the type of the ratio limit and is designated for (e.g., minimally designated for) the second core 122 of the memory controller 120 to transmit the trim completion response.

In an embodiment, the fourth rate R4 may be determined for each of streams that are set in the storage device 100. In an embodiment, the storage device 100 may manage the performance of the trim operation (or the ratio of the trim operation) corresponding to the fourth bucket BK4 based on the fourth rate R4, for each stream.

For example, the fourth size S4 may be 2 GB or more, and the fourth rate R4 may be 1.5TiB/s. When the host device 200 transmit the trim command for data corresponding to the fourth size S4 to the memory controller 120, the memory controller 120 may perform the trim operation. The second core 122 of the memory controller 120 may compare a completion time point of the trim operation and the fourth rate R4 and may adjust the timing to transmit the trim completion response to the host device 200.

For example, when the completion time point of the trim operation is earlier than a time point expected when the trim operation is performed based on the fourth rate R4, the second core 122 may transmit the trim completion response to the host device 200 based on the fourth rate R4.

In an embodiment, in the first trim performance table TPT1 or the second trim performance table TPT2, the size, the type of the ratio limit, and the rate of stream of the trim operation may be differently set for each stream.

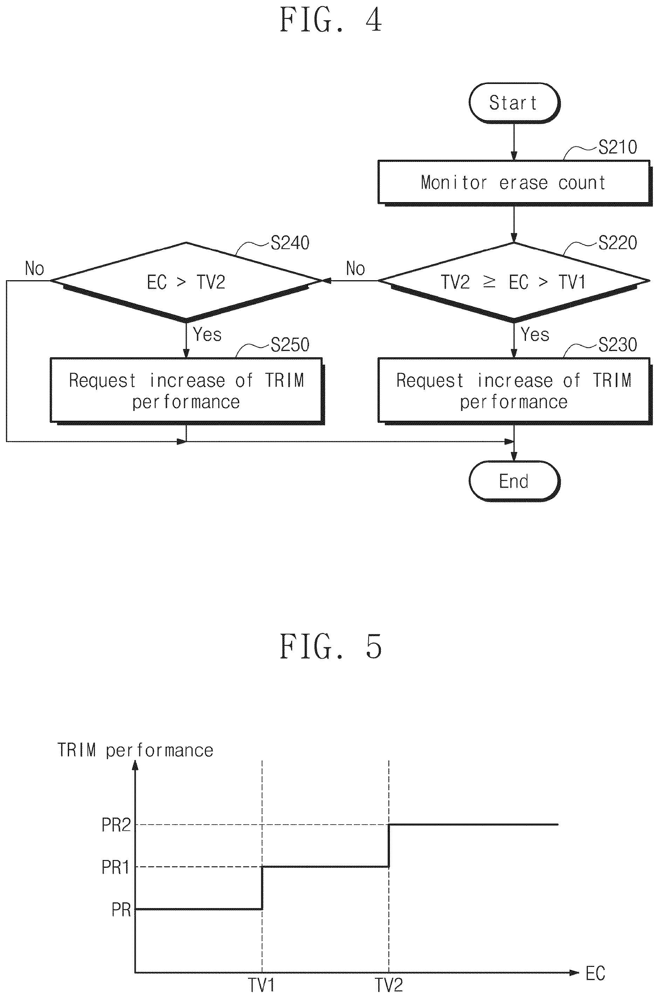

FIG. 4 illustrates a method in which the storage device 100 according to an embodiment of the present disclosure detects the trim performance change condition. Referring to FIGS. 1, 2, and 4, in operation S210, the storage device 100 may monitor an erase count EC. For example, the memory controller 120 of the storage device 100 may monitor a maximum erase count, an average erase count, or a minimum erase count of memory blocks of the nonvolatile memory devices 110.

In an embodiment, as the erase count EC increases, the erase performance of the nonvolatile memory devices 110 may decrease. For example, as the erase count EC increases, the erase speed of the nonvolatile memory devices 110 may decrease, and a time taken to perform the trim operation may increase.

In operation S220, the storage device 100 may determine whether the erase count EC is greater than a first threshold value TV1 and is equal to or smaller than a second threshold value TV2. When the erase count EC is greater than the first threshold value TV1 and is equal to or smaller than the second threshold value TV2, in operation S230, the storage device 100 may request the increase of the trim performance. For example, the memory controller 120 may compensate for the reduction of trim performance by requesting the increase of the trim performance, that is, the decrease of the trim response time from the host device 200. In an embodiment, when the erase count EC is greater than the first threshold value TV1 and is equal to or smaller than the second threshold value TV2, the memory controller 120 may request the increase of the trim performance once.

When the erase count EC is greater than the first threshold value TV1 and is not equal to or smaller than the second threshold value TV2, in operation S240, the storage device 100 may determine whether the erase count EC is greater than the second threshold value TV2. When the erase count EC is not greater than the second threshold value TV2, the storage device 100 may not request the change of the trim performance from the host device 200.

When the erase count EC is greater than the second threshold value TV2, in operation S250, the storage device 100 may request the increase of the trim performance. For example, the memory controller 120 may compensate for the reduction of the trim performance by requesting the increase of the trim performance, that is, the decrease of the trim response time from the host device 200, for example, by increasing the trim rate. In an embodiment, when the erase count EC is greater than the second threshold value TV2, the memory controller 120 may request the increase of the trim performance once.

In an embodiment, as the trim response time decreases, the degree of delaying the timing at which the memory controller 120 of the storage device 100 transmits the trim completion response to the host device 200 may decrease. Accordingly, the increase of the trim performance (or the increase of the trim rate) may be accomplished by decreasing the trim response time.

FIG. 5 illustrates an example in which trim performance is increased depending on the erase count EC in the storage device 100. In FIG. 5, the horizontal axis represents the erase count EC, and the vertical axis represents trim performance.

Referring to FIGS. 1, 4, and 5, when the erase count EC is equal to or smaller than the first threshold value TV1, the trim performance of the storage device 100 may be default performance PR. The default performance PR may correspond to a default trim response time.

When the erase count EC is greater than the first threshold value TV1 and is equal to or smaller than the second threshold value TV2, the storage device 100 may request the host device 200 to increase the trim performance. The host device 200 may change the trim performance of the storage device 100 from the default performance PR to first performance PR1. The first performance PR1 may be higher than the default performance PR. The first performance PR1 may correspond to a first trim response time shorter than the default trim response time.

When the erase count EC is greater than the second threshold value TV2, the storage device 100 may request the host device 200 to increase the trim performance. The host device 200 may change the trim performance of the storage device 100 from the first performance PR1 to second performance PR2. The second performance PR2 may be higher than the first performance PR1. The second performance PR2 may correspond to a second trim response time shorter than the first trim response time.

In an embodiment, because it is impossible to decrease the erase count EC, the change of the trim performance according to the erase count EC may be irreversible. That is, as the erase count EC continuously increases, the trim performance according to the erase count EC may continuously increase.

As described above, the storage device 100 may classify values of the erase count EC into sections (or zones) to request the sequential (or stepwise) increase of the trim performance from the host device 200. The host device 200 may change the trim performance of the storage device 100 depending on the request of the storage device 100. Accordingly, as the trim response time or the trim rate is adjusted depending on the erase count EC, the trim performance may be prevented from decreasing due to the degradation of the nonvolatile memory devices 110.

In an embodiment, in a section in which the erase count EC is the greatest, the storage device 100 may enter a read-only mode. In the read-only mode, the storage device 100 may request the highest trim performance (or the shortest trim response time) from the host device 200. When the storage device 100 is in the read-only mode, the host device 200 may set the trim performance of the storage device 100 to be the highest (or may set the trim response time of the storage device 100 to be the shortest).

In an embodiment, the storage device 100 may enter the read-only mode regardless of the erase count EC. For example, when the number of bad blocks is greater than a threshold value, the host device 200 may set the storage device 100 to the read-only mode regardless of the erase count EC. For another example, when a capacitor that is included in the storage device 100 and is used as an emergency power source is damaged, the host device 200 may set the storage device 100 to the read-only mode regardless of the erase count EC. When the storage device 100 enters the read-only mode regardless of the erase count EC, the host device 200 may set the trim performance of the storage device 100 to be the highest (or may set the trim response time of the storage device 100 to be the shortest).

The change of the trim performance described with reference to FIGS. 4 and 5 shows embodiments that are based on the erase count EC or based on entering the read-only mode. The change of the trim performance is not limited to the case of being based only on the erase count EC or the entering of the read-only mode. The embodiment in which the trim performance is adjusted based on the erase count EC or the entering of the read-only mode may be variously implemented in combination with any other trim performance change conditions.

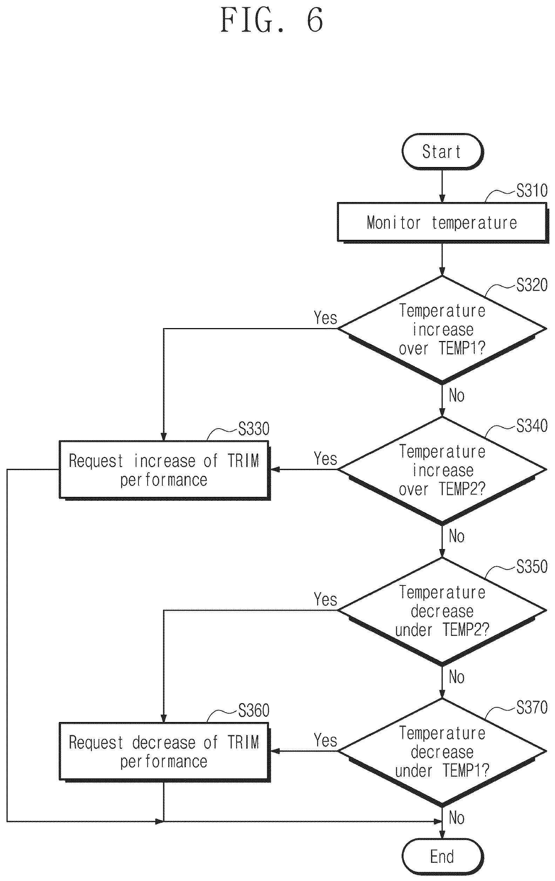

FIG. 6 illustrates another method in which the storage device 100 according to an embodiment of the present disclosure detects a trim performance change condition. Referring to FIGS. 1, 2, and 6, in operation S310, the storage device 100 may monitor a temperature. For example, the memory controller 120 of the storage device 100 may monitor a temperature of the nonvolatile memory devices 110 or the memory controller 120.

In an embodiment, as the temperature increases, the erase performance of the nonvolatile memory devices 110 may decrease. For example, as the temperature increases, the erase speed of the nonvolatile memory devices 110 may decrease, and a time taken to perform the trim operation may increase.

In operation S320, the storage device 100 may determine whether the temperature increases to above a first temperature TEMP1. When the temperature does not increase to above the first temperature TEMP1 (e.g., when the temperature is equal to or lower than the first temperature TEMP1), the storage device 100 may perform operation S340.

When the temperature increases to above the first temperature TEMP1, in operation S330, the storage device 100 may request the increase of the trim performance. For example, when the temperature becomes higher than the first temperature TEMP1 from a temperature equal to or lower than the first temperature TEMP1, the storage device 100 may request the increase of the trim performance from the host device 200. Afterwards, the storage device 100 may terminate a process associated with the change of the trim performance.

For example, the memory controller 120 may compensate for the reduction of the trim performance by requesting the increase of the trim performance, that is, the decrease of the trim response time from the host device 200, for example, by increasing the trim rate.

In operation S340, the storage device 100 may determine whether the temperature increases to above a second temperature TEMP2. When the temperature does not increase to above the second temperature TEMP2 (e.g., when the temperature is equal to or lower than the second temperature TEMP2), the storage device 100 may perform operation S350.

When the temperature increases to above the second temperature TEMP2, in operation S330, the storage device 100 may request the increase of the trim performance. For example, when the temperature becomes higher than the second temperature TEMP2 from a temperature equal to or lower than the second temperature TEMP2 (or a temperature higher than the first temperature TEMP1), the storage device 100 may request the increase of the trim performance from the host device 200. Afterwards, the storage device 100 may terminate the process associated with the change of the trim performance.

In operation S350, the storage device 100 may determine whether the temperature decreases to below the second temperature TEMP2. When the temperature does not decrease to below the second temperature TEMP2, that is, when the temperature is equal to or higher than the second temperature TEMP2, the storage device 100 may perform operation S370.

In operation S350, when the temperature decreases to below the second temperature TEMP2, in operation S360, the storage device 100 may request the reduction of the trim performance of the storage device 100. For example, when the temperature becomes equal to or lower than the second temperature TEMP2 from a temperature higher than the second temperature TEMP2, the storage device 100 may request the decrease of the trim performance of the storage device 100 from the host device 200. Afterwards, the storage device 100 may terminate the process associated with the change of the trim performance.

In operation S370, the storage device 100 may determine whether the temperature decreases to below the first temperature TEMP1. When the temperature does not decrease to below the first temperature TEMP1, that is, when the temperature is higher than the first temperature TEMP1, the storage device 100 may terminate the process associated with the change of the trim performance without requesting the change of the trim performance.

When it is determined in operation S370 that the temperature decreases to below the first temperature TEMP1, in operation S360, the storage device 100 may request the reduction of the trim performance of the storage device 100. For example, when the temperature becomes equal to or lower than the first temperature TEMP1 from a temperature higher than the first temperature TEMP1 (or a temperature equal to or lower than the second temperature TEMP2), the storage device 100 may request the decrease of the trim performance from the host device 200. Afterwards, the storage device 100 may terminate the process associated with the change of the trim performance.

In an embodiment, as the trim response time decreases, the degree of delaying the timing at which the memory controller 120 of the storage device 100 transmits the trim completion response to the host device 200 may decrease. Accordingly, the increase of the trim performance (or the increase of the trim rate) may be accomplished by decreasing the trim response time.

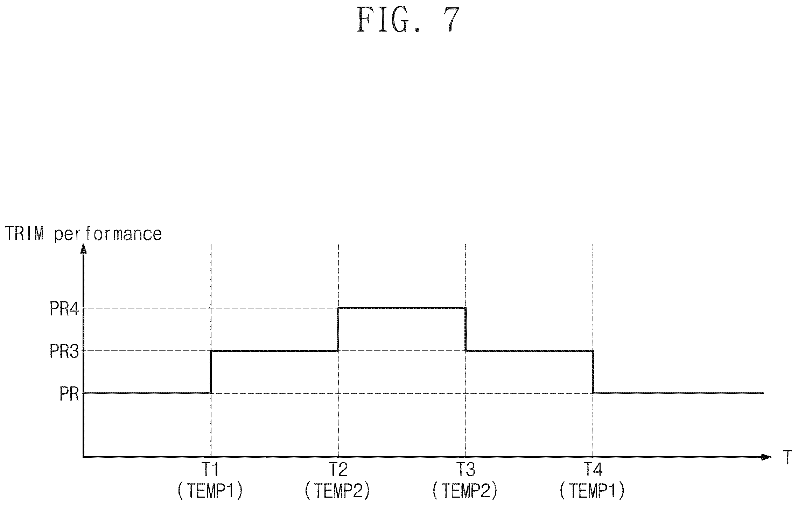

FIG. 7 illustrates an example in which trim performance is adjusted depending on a temperature in the storage device 100. In FIG. 7, the horizontal axis represents a time "T", and the vertical axis represents trim performance.

Referring to FIGS. 1, 6, and 7, before a first time point T1, when the temperature is not higher than the first temperature TEMP1, that is, when the temperature is equal to or lower than the first temperature TEMP1, the trim performance of the storage device 100 may be the default performance PR. The default performance PR may correspond to a default trim response time.

At the first time point T1 at which the temperature becomes higher than the first temperature TEMP1, the storage device 100 may request the increase of the trim performance from the host device 200. The host device 200 may change the trim performance of the storage device 100 from the default performance PR to third performance PR3. The third performance PR3 may be higher than the default performance PR. The third performance PR3 may correspond to a third trim response time shorter than the default trim response time.

At a second time point T2 at which the temperature becomes higher than the second temperature TEMP2, the storage device 100 may request the increase of the trim performance from the host device 200. The host device 200 may change the trim performance of the storage device 100 from the third performance PR3 to fourth performance PR4. The fourth performance PR4 may be higher than the third performance PR3. The fourth performance PR4 may correspond to a fourth trim response time shorter than the third trim response time.

At a third time point T3 at which the temperature becomes lower than the second temperature TEMP2, the storage device 100 may request the decrease of the trim performance from the host device 200. The host device 200 may change the trim performance of the storage device 100 from the fourth performance PR4 to the third performance PR3. The third performance PR3 may be lower than the fourth performance PR4. The third performance PR3 may correspond to the third trim response time longer than the fourth trim response time.

At a fourth time point T4 at which the temperature becomes lower than the first temperature TEMP1, the storage device 100 may request the decrease of the trim performance from the host device 200. The host device 200 may change the trim performance of the storage device 100 from the third performance PR3 to the default performance PR. The default performance PR may be lower than the third performance PR3. The default performance PR may correspond to the default trim response time longer than the third trim response time.

In an embodiment, because the temperature may be increased or decreased, the change of the trim performance according to the temperature may be irreversible. That is, the trim performance (e.g., the trim response time) according to the temperature may change over time.

As described above, the storage device 100 may classify temperature values into sections (or zones) to request the sequential (or stepwise) increase of the trim performance from the host device 200. The host device 200 may change the trim performance of the storage device 100 depending on the request of the storage device 100. Accordingly, the trim performance may be prevented from decreasing depending on the temperature of the nonvolatile memory devices 110 or the memory controller 120, by adjusting the trim response time or the trim rate depending on the temperature.

The change of the trim performance described with reference to FIGS. 6 and 7 is associated with embodiments based on a temperature. The change of the trim performance is not limited to the case of being based only on a temperature. The embodiment in which the trim performance is adjusted based on a temperature may be variously implemented in combination with the embodiments (refer to FIGS. 4 and 5) in which the trim performance is adjusted based on the erase count EC and the entering of the read-only mode.

In an embodiment, the method described with reference to FIGS. 6 and 7 may be repeatedly performed periodically based on a time period, when a temperature is changed as much as a threshold value or more, or by comparing the temperature with the first temperature TEMP1 and the second temperature TEMP2.

In an embodiment, pieces of information for the trim performance change request, such as the first temperature TEMP1 and the second temperature TEMP2, may be stored in the storage device 100 in the process of manufacturing the storage device 100 or may be stored in the storage device 100 by the host device 200.

In an embodiment, to prevent the trim performance from increasing and decreasing repeatedly, a hysteresis may be set to each of the first temperature TEMP1 and the second temperature TEMP2. For example, in association with the first temperature TEMP1, a temperature for determining whether to increase the trim performance may be different from a temperature for determining whether to decrease the trim performance. Likewise, in association with the second temperature TEMP2, a temperature for determining whether to increase the trim performance may be different from a temperature for determining whether to decrease the trim performance. A temperature for determining whether to increase the trim performance may be higher than a temperature for determining whether to decrease the trim performance.

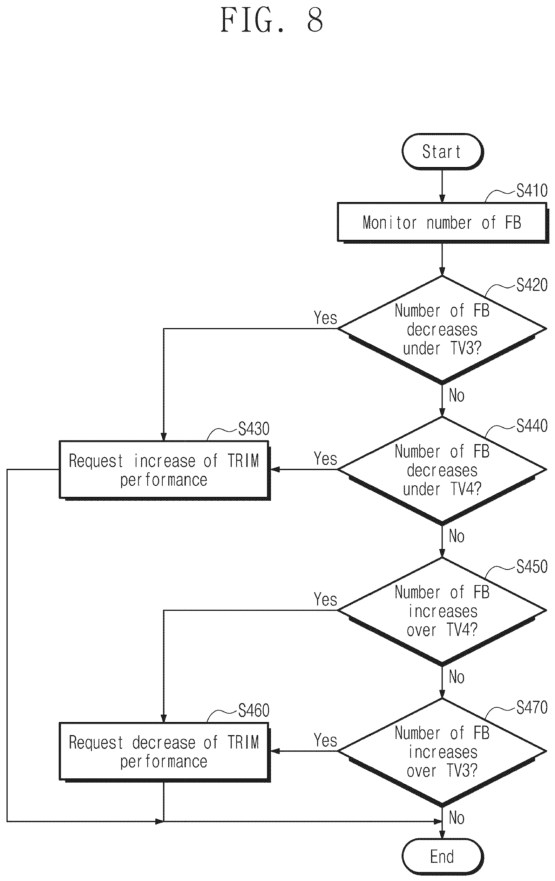

FIG. 8 illustrates another method in which the storage device 100 according to an embodiment of the present disclosure detects a trim performance change condition. Referring to FIGS. 1, 2, and 8, in operation S410, the storage device 100 may monitor the number of free blocks FB. For example, the memory controller 120 of the storage device 100 may monitor the number of free blocks FB.

In an embodiment, as the number of free blocks FB decreases, the demand on an operation of generating free blocks FB in the nonvolatile memory devices 110, such as a trim operation or a garbage collection operation, may increase.

In operation S420, the storage device 100 may determine whether the number of free blocks FB decreases to below a third threshold value TV3. When the number of free blocks FB does not decrease to below the third threshold value TV3 (e.g., when the number of free blocks FB is greater than the third threshold value TV3), the storage device 100 may perform operation S440.

When the number of free blocks FB decreases to below the third threshold value TV3, in operation S430, the storage device 100 may request the increase of the trim performance. For example, when the number of free blocks FB becomes equal to or smaller than the third threshold value TV3 from a value greater than the third threshold value TV3, the storage device 100 may request the increase of the trim performance from the host device 200. Afterwards, the storage device 100 may terminate the process associated with the change of the trim performance.

For example, the memory controller 120 may compensate for the reduction of the trim performance by requesting the increase of the trim performance, that is, the decrease of the trim response time from the host device 200, for example, by increasing the trim rate.

In operation S440, the storage device 100 may determine whether the number of free blocks FB decreases to below a fourth threshold value TV4. When the number of free blocks FB does not decrease to below the fourth threshold value TV4 (e.g., when the number of free blocks FB is greater than the fourth threshold value TV4), the storage device 100 may perform operation S450.

When the number of free blocks FB decreases to below the fourth threshold value TV4, in operation S430, the storage device 100 may request the increase of the trim performance. For example, when the number of free blocks FB becomes equal to or smaller than the fourth threshold value TV4 from a value greater than the fourth threshold value TV4 (or from a value equal to or smaller than the third threshold value TV3), the storage device 100 may request the increase of the trim performance from the host device 200. Afterwards, the storage device 100 may terminate the process associated with the change of the trim performance.

In operation S450, the storage device 100 may determine whether the number of free blocks FB increases to above the fourth threshold value TV4. When the number of free blocks FB does not increase to above the fourth threshold value TV4, that is, when the number of free blocks FB is equal to or smaller than the fourth threshold value TV4, the storage device 100 may perform operation S470.

When it is determined in operation S450 that the number of free blocks FB increases to above the fourth threshold value TV4, in operation S460, the storage device 100 may request the decrease of the trim performance. For example, when the number of free blocks FB becomes greater than the fourth threshold value TV4 from a value equal to or lower than the fourth threshold value TV4, the storage device 100 may request the decrease of the trim performance from the host device 200. Afterwards, the storage device 100 may terminate the process associated with the change of the trim performance.

In operation S470, the storage device 100 may determine whether the number of free blocks FB increases to above the third threshold value TV3. When the number of free blocks FB does not increase to above the third threshold value TV3, that is, when the number of free blocks FB is equal to or smaller than the third threshold value TV3, the storage device 100 may terminate the process associated with the change of the trim performance without requesting the change of the trim performance.

When it is determined in operation S470 that the number of free blocks FB increases to above the third threshold value TV3, in operation S460, the storage device 100 may request the decrease of the trim performance. For example, when the number of free blocks FB becomes equal to or smaller than the third value TV3 from a value equal to or lower than the third threshold value TV3 (or from a value greater than the fourth threshold value TV4), the storage device 100 may request the decrease of the trim performance from the host device 200. Afterwards, the storage device 100 may terminate the process associated with the change of the trim performance.

In an embodiment, as the trim response time decreases, the degree of delaying the timing at which the memory controller 120 of the storage device 100 transmits the trim completion response to the host device 200 may decrease. Accordingly, the increase of the trim performance (or the increase of the trim rate) may be accomplished by decreasing the trim response time.

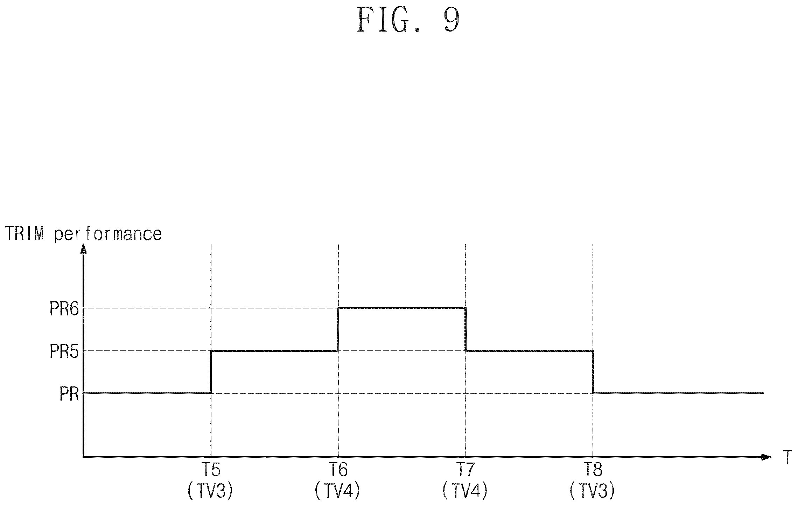

FIG. 9 illustrates an example in which trim performance is adjusted depending on the number of free blocks FB in the storage device 100. In FIG. 9, the horizontal axis represents a time "T", and the vertical axis represents trim performance.

Referring to FIGS. 1, 8, and 9, before a fifth time point T5, when the number of free blocks FB does not become smaller than the third threshold value TV3, that is, when the number of free blocks FB is greater than the third threshold value TV3, the trim performance of the storage device 100 may be the default performance PR. The default performance PR may correspond to a default trim response time.

At a fifth time point T5 at which number of free blocks FB becomes smaller than the third threshold value TV3, the storage device 100 may request the increase of the trim performance from the host device 200. The host device 200 may change the trim performance of the storage device 100 from the default performance PR to fifth performance PR5. The fifth performance PR5 may be higher than the default performance PR. The fifth performance PR5 may correspond to a fifth trim response time shorter than the default trim response time.

At a sixth time point T6 at which the number of free blocks FB becomes smaller than the fourth threshold value TV4, the storage device 100 may request the increase of the trim performance from the host device 200. The host device 200 may change the trim performance of the storage device 100 from the fifth performance PR5 to sixth performance PR6. The sixth performance PR6 may be higher than the fifth performance PR5. The sixth performance PR6 may correspond to a sixth trim response time shorter than the fifth trim response time.

At a seventh time point T7 at which the number of free blocks FB becomes greater than the fourth threshold value TV4, the storage device 100 may request the decrease of the trim performance from the host device 200. The host device 200 may change the trim performance of the storage device 100 from the sixth performance PR6 to the fifth performance PR5. The fifth performance PR5 may be lower than the sixth performance PR6. The fifth performance PR5 may correspond to the fifth trim response time longer than the sixth trim response time.

At an eighth time point T8 at which the number of free blocks FB becomes greater than the third threshold value TV3, the storage device 100 may request the decrease of the trim performance from the host device 200. The host device 200 may change the trim performance of the storage device 100 from the fifth performance PR5 to the default performance PR. The default performance PR may be lower than the fifth performance PR5. The default performance PR may correspond to the default trim response time longer than the fifth trim response time.

In an embodiment, because the number of free blocks FB may increase or decrease, the change of the trim performance according to the number of free blocks FB may be irreversible. That is, the trim performance (e.g., the trim response time) according to the number of free blocks FB may change over time.

As described above, the storage device 100 may classify values each indicating the number of free blocks FB into sections (or zones) to request the sequential (or stepwise) increase of the trim performance from the host device 200. The host device 200 may change the trim performance of the storage device 100 depending on the request of the storage device 100. Accordingly, it may be easy to secure free blocks in the storage device 100 by adjusting the trim response time or the trim rate depending on the number of free blocks FB.

The change of the trim performance described with reference to FIGS. 8 and 9 is associated with embodiments based on the number of free blocks FB. The change of the trim performance is not limited to the case of being based only on the number of free blocks FB. The embodiment in which the trim performance is adjusted based on the number of free blocks FB may be variously implemented in combination with any other trim performance change conditions, for example, in combination with the embodiments (refer to FIGS. 4 and 5) in which the trim performance is adjusted based on the erase count EC and the entering of the read-only mode and the embodiments (refer to FIGS. 6 and 7) in which the trim performance is adjusted based on a temperature.

In an embodiment, the method described with reference to FIGS. 8 and 9 may be repeatedly performed periodically based on a time period, when the number of free blocks FB is changed as much as a threshold value or more, or by comparing the number of free blocks FB with the third threshold value TV3 and the fourth threshold value TV4.

In an embodiment, pieces of information for the trim performance change request, such as the third threshold value TV3 and the fourth threshold value TV4, may be stored in the storage device 100 in the process of manufacturing the storage device 100 or may be stored in the storage device 100 by the host device 200.

In an embodiment, to prevent the trim performance from increasing and decreasing repeatedly, a hysteresis may be set to each of the third threshold value TV3 and the fourth threshold value TV4. For example, in association with the third threshold value TV3, the number of free blocks FB for determining whether to increase the trim performance may be different from the number of free blocks FB for determining whether to decrease the trim performance. Likewise, in association with the fourth threshold value TV4, the number of free blocks FB for determining whether to increase the trim performance may be different from the number of free blocks FB for determining whether to decrease the trim performance. The number of free blocks FB for determining whether to increase the trim performance may be more than the number of free blocks FB for determining whether to decrease the trim performance.

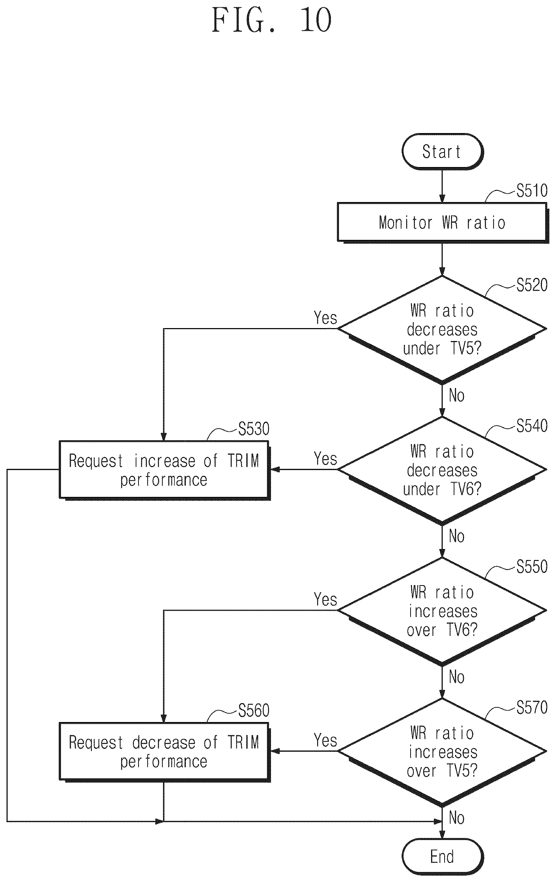

FIG. 10 illustrates another method in which the storage device 100 according to an embodiment of the present disclosure detects a trim performance change condition. Referring to FIGS. 1, 2, and 10, in operation S510, the storage device 100 may monitor a write and read (WR) ratio. For example, the memory controller 120 of the storage device 100 may monitor the number of write commands received from the host device 200 to the number of read commands received from the host device 200 as the WR ratio.

In an embodiment, as the WR ratio increases, the number of write commands to be processed in the storage device 100 may increase. To accelerate the processing of write commands, there may be an increasing demand for limiting the performance of the trim operation (e.g., a ratio of the trim operation). In contrast, when the WR ratio decreases, because the storage device 100 processes more read commands relatively quickly compared to write commands, the performance of the trim operation (e.g., the ratio of the trim operation) may be permitted to be higher.

In operation S520, the storage device 100 may determine whether the WR ratio decreases to below a fifth threshold value TV5. When the WR ratio does not decrease to below the fifth threshold value TV5 (e.g., when the WR ratio is greater than the fifth threshold value TV5), the storage device 100 may perform operation S540.

When the WR ratio decreases to below the fifth threshold value TV5, in operation S530, the storage device 100 may request the increase of the trim performance. For example, when the WR ratio becomes equal to or smaller than the fifth threshold value TV5 from a value greater than the fifth threshold value TV5, the storage device 100 may request the increase of the trim performance from the host device 200. Afterwards, the storage device 100 may terminate the process associated with the change of the trim performance.

For example, the memory controller 120 may increase the trim performance (e.g., the trim rate) by requesting the decrease of the trim response time from the host device 200. Likewise, the memory controller 120 may increase the trim performance (e.g., the trim rate) by requesting the decrease of the trim response time from the host device 200.

In operation S540, the storage device 100 may determine whether the WR ratio decreases to below a sixth threshold value TV6. When the WR ratio does not decrease to below the sixth threshold value TV6 (e.g., when the WR ratio is greater than the sixth threshold value TV6), the storage device 100 may perform operation S550.

When the WR ratio decreases to below the sixth threshold value TV6, in operation S530, the storage device 100 may request the increase of the trim performance. For example, when the WR ratio becomes equal to or smaller than the sixth threshold value TV6 from a value greater than the sixth threshold value TV6 (or from a value equal to or smaller than the fifth threshold value TV5), the storage device 100 may request the increase of the trim performance from the host device 200. Afterwards, the storage device 100 may terminate the process associated with the change of the trim performance.

In operation S550, the storage device 100 may determine whether the WR ratio increases to above the sixth threshold value TV6. When the WR ratio does not increase to above the sixth threshold value TV6, that is, when the WR ratio is equal to or smaller than the sixth threshold value TV6, the storage device 100 may perform operation S570.

When it is determined in operation S550 that the WR ratio increases to above the sixth threshold value TV6, in operation S560, the storage device 100 may request the decrease of the trim performance. For example, when the WR ratio becomes greater than the sixth threshold value TV6 from a value equal to or smaller than the sixth threshold value TV6, the storage device 100 may request the decrease of the trim performance from the host device 200. Afterwards, the storage device 100 may terminate the process associated with the change of the trim performance.

In operation S570, the storage device 100 may determine whether the WR ratio increases to above the fifth threshold value TV5. When the WR ratio does not increase to above the fifth threshold value TV5, that is, when the WR ratio is equal to or smaller than the fifth threshold value TV5, the storage device 100 may terminate the process associated with the change of the trim performance without requesting the change of the trim performance.

When it is determined in operation S570 that the WR ratio increases to above the fifth threshold value TV5, in operation S560, the storage device 100 may request the decrease of the trim performance. For example, when the WR ratio becomes equal to or smaller than the fifth threshold value TV5 from a value equal to or smaller than the fifth threshold value TV5 (or from a value greater than the sixth threshold value TV6), the storage device 100 may request the decrease of the trim performance from the host device 200. Afterwards, the storage device 100 may terminate the process associated with the change of the trim performance.

In an embodiment, as the trim response time decreases, the degree of delaying the timing at which the memory controller 120 of the storage device 100 transmits the trim completion response to the host device 200 may decrease. Accordingly, the increase of the trim performance (or the increase of the trim rate) may be accomplished by decreasing the trim response time. Likewise, the decrease of the trim performance (or the decrease of the trim rate) may be accomplished by increasing the trim response time.

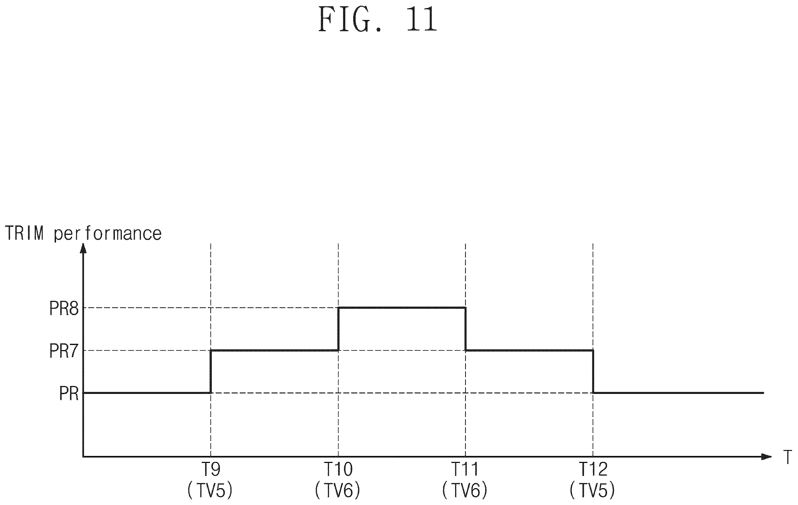

FIG. 11 illustrates an example in which trim performance is adjusted depending on a WR ratio in the storage device 100. In FIG. 11, the horizontal axis represents a time "T", and the vertical axis represents trim performance.

Referring to FIGS. 1, 10, and 11, before a ninth time point T9, when the WR ratio does not become smaller than the fifth threshold value TV5, that is, when the WR ratio is greater than the fifth threshold value TV5, the trim performance of the storage device 100 may be the default performance PR. The default performance PR may correspond to a default trim response time.

At a ninth time point T9 at which the WR ratio becomes smaller than the fifth threshold value TV5, the storage device 100 may request the increase of the trim performance from the host device 200. The host device 200 may change the trim performance of the storage device 100 from the default performance PR to seventh performance PR7. The seventh performance PR7 may be higher than the default performance PR. The seventh performance PR7 may correspond to a seventh trim response time shorter than the default trim response time.

At a tenth time point T10 at which the WR ratio becomes smaller than the sixth threshold value TV6, the storage device 100 may request the increase of the trim performance from the host device 200. The host device 200 may change the trim performance of the storage device 100 from the seventh performance PR7 to eighth performance PR8. The eighth performance PR8 may be higher than the seventh performance PR7. The eighth performance PR8 may correspond to an eighth trim response time shorter than the seventh trim response time.

At an eleventh time point T11 at which the WR ratio becomes greater than the sixth threshold value TV6, the storage device 100 may request the decrease of the trim performance from the host device 200. The host device 200 may change the trim performance of the storage device 100 from the eighth performance PR8 to the seventh performance PR7. The seventh performance PR7 may be lower than the eighth performance PR8. The seventh performance PR7 may correspond to the seventh trim response time longer than the eighth trim response time.

At a twelfth time point T12 at which the WR ratio becomes greater than the fifth threshold value TV5, the storage device 100 may request the decrease of the trim performance from the host device 200. The host device 200 may change the trim performance of the storage device 100 from the seventh performance PR7 to the default performance PR. The default performance PR may be lower than the seventh performance PR7. The default performance PR may correspond to the default trim response time longer than the seventh trim response time.

In an embodiment, because the WR ratio may increase or decrease, the change of the trim performance according to the WR ratio may be irreversible. That is, the trim performance (e.g., the trim response time) according to the WR ratio may change over time.

As described above, the storage device 100 may classify values of the WR ratio into sections (or zones) to request the sequential (or stepwise) increase of the trim performance from the host device 200. The host device 200 may change the trim performance of the storage device 100 depending on the request of the storage device 100. Accordingly, a speed at which the storage device 100 processes a write command may be guaranteed by adjusting the trim response time or the trim rate depending on the WR ratio.

The change of the trim performance described with reference to FIGS. 10 and 11 is associated with embodiments based on the WR ratio. The change of the trim performance is not limited to the case of being based only on the WR ratio. The embodiment in which the trim performance is adjusted based on the WR ratio may be variously implemented in combination with any other trim performance change conditions, for example, in combination with the embodiments (refer to FIGS. 4 and 5) in which the trim performance is adjusted based on the erase count EC and the entering of the read-only mode, the embodiments (refer to in FIGS. 6 and 7) in which the trim performance is adjusted based on a temperature, and the embodiments (refer to FIGS. 8 and 9) in which the trim performance is adjusted based on the number of free blocks FB.

In an embodiment, the method described with reference to FIGS. 10 and 11 may be repeatedly performed periodically based on a time period, when the WR ratio is changed as much as a threshold value or more, or by comparing the WR ratio with the fifth threshold value TV5 and the sixth threshold value TV6.

In an embodiment, pieces of information for the trim performance change request, such as the fifth threshold value TV5 and the sixth threshold value TV6, may be stored in the storage device 100 in the process of manufacturing the storage device 100 or may be stored in the storage device 100 by the host device 200.

In an embodiment, to prevent the trim performance from increasing and decreasing repeatedly, a hysteresis may be set to each of the fifth threshold value TV5 and the sixth threshold value TV6. For example, in association with the fifth threshold value TV5, the WR ratio for determining whether to increase the trim performance may be different from the WR ratio for determining whether to decrease the trim performance. Likewise, in association with the sixth threshold value TV6, the WR ratio for determining whether to increase the trim performance may be different from the WR ratio for determining whether to decrease the trim performance. The WR ratio for determining whether to increase the trim performance may be lower than the WR ratio for determining whether to decrease the trim performance.

In an embodiment, the performance of the trim operation may be adjusted based on machine learning. The memory controller 120 of the storage device 100 may transmit at least one of information of the erase count EC, temperature information, information of the number of free blocks FB, and information of the WR ratio to the host device 200. The host device 200 may execute a machine learning module. The host device 200 may infer (or determine) the performance of the trim operation (e.g., the trim rate) of the storage device 100, based on at least one of information of the erase count EC, temperature information, information of the number of free blocks FB, and information of the WR ratio.

As another example, the memory controller 120 may execute a machine learning module. The memory controller 120 may infer (or determine) the performance of the trim operation (e.g., the trim rate) of the storage device 100, based on at least one of information of the erase count EC, temperature information, information of the number of free blocks FB, and information of the WR ratio.

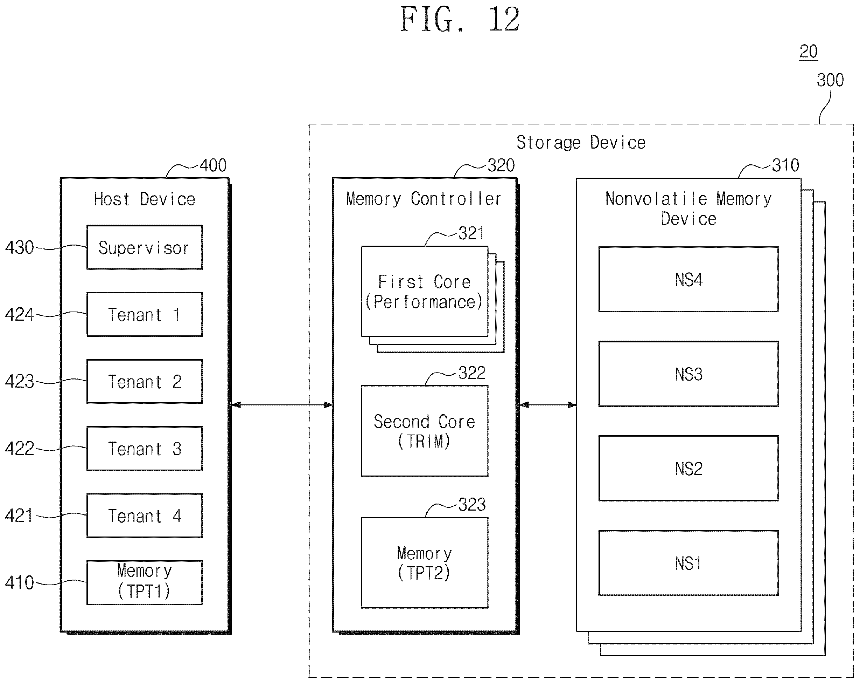

FIG. 12 illustrates a computing device 20 according to another embodiment of the present disclosure. Referring to FIG. 12, a computing device 20 may include a storage device 300 and a host device 400.

The storage device 300 may include nonvolatile memory devices 310 and a memory controller 320. The storage device 300 may receive the write command, the read command, and the trim operation from the host device 400.

The host device 400 may include a memory 410 that stores the first trim performance table TPT1. The host device 400 may set the second trim performance table TPT2 in the storage device 300 based on the first trim performance table TPT1.

The storage device 300 may manage the performance of the trim operation (e.g., the ratio of the trim operation), based on the second trim performance table TPT2. As described with reference to FIGS. 1 to 11, when the feature or environment of the storage device 300 changes, the memory controller 320 of the storage device 300 may request the change of the trim performance from the host device 400.

The storage device 300 may be configured to support a multi-host or a multi-tenant. For example, the computing device 20 may be implemented with a multi-tenant computing device.

The host device 400 may include a supervisor 430 and first to fourth tenants 421 to 424. Each of the supervisor 430 and the first to fourth tenants 421 to 424 may access the storage device 300. For example, each of the supervisor 430 and the first to fourth tenants 421 to 424 may independently issue a command, for example, the write command, the read command, or the trim command.

In an embodiment, the supervisor 430 and the first to fourth tenants 421 to 424 may be single core processor or multi-core processors respectively included in different computing nodes. Alternatively, at least some of the supervisor 430 and the first to fourth tenants 421 to 424 may be different processors included in the same computing node. However, the present disclosure is not limited thereto. For example, the supervisor 430 and the first to fourth tenants 421 to 424 may be processors configured to execute different applications or may be different virtual machines.

The storage device 300 may allocate different storage spaces to the first to fourth tenants 421 to 424, respectively. For example, the memory controller 320 may allocate first to fourth namespaces NS1 to NS4 to the first to fourth tenants 421 to 424, respectively. However, the present disclosure is not limited thereto. For example, the memory controller 320 may allocate a plurality of namespaces NS to one tenant.

Each of the first to fourth tenants 421 to 424 may access only a namespace allocated by the storage device 300. For example, the first tenant 421 may access the first namespace NS1 by providing a command including a namespace identifier of "1" to the memory controller 320, and the second tenant 422 may access the second namespace NS2 by providing a command including a namespace identifier of "2" to the memory controller 320. However, the present disclosure is not limited thereto.

The supervisor 430 may manage the QoS of each of the first to fourth tenants 421 to 424. For example, the supervisor 430 may manage the QoS of each of the first to fourth tenants 421 to 424 in various methods including a method of adjusting priorities of commands respectively issued from the first to fourth tenants 421 to 424 so as to be transmitted to the memory controller 320.

The supervisor 430 may adjust a time point to transmit the corresponding command to the memory controller 320, based on a processing load of a specific command and the QoS of a tenant issuing the corresponding command. For example, the supervisor 430 may identify the processing load for the corresponding command based on a packet of the specific command and may adjust a time point to transmit the corresponding command to the memory controller 320 in consideration of the processing load and the QoS of the tenant issuing the corresponding command.

The supervisor 430 may control the trim performance of each of the first to fourth tenants 421 to 424. For example, the supervisor 430 described above may receive the first trim performance table TPT1 from the memory 410 may store the second trim performance table TPT2 based on the first trim performance table TPT1. The supervisor 430 may control the trim performance of each of the first to fourth tenants 421 to 424 by providing the first trim performance table TPT1 to the memory controller 320.

The supervisor 430 may determine target trim performance of each of the first to fourth namespaces NS1 to NS4, based on the QoS that each of the first to fourth tenants 421 to 424 requires. For example, when the first tenant 421 requires a low QoS, the supervisor 430 may set the target trim performance of the namespace allocated to the first tenant 421 to be low. In contrast, when the first tenant 422 requires a high QoS, the supervisor 430 may set the target trim performance of the namespace allocated to the second tenant 422 to be high. In this case, the trim command issued from the tenant requiring the high QoS may be processed relatively quickly, and the trim command issued from the tenant requiring the low QoS may be processed relatively slowly. Accordingly, according to an embodiment of the present disclosure, even though the trim command with a large trim load is issued from the tenant requiring the low QoS, the phenomenon that the resource of the memory controller 320 is excessively occupied to process the corresponding trim command may be minimized.

As the feature or environment of the storage device 300 changes, the memory controller 320 may request the host device 400 to update the first trim performance table TPT1 of each of the first to fourth namespaces NS1 to NS4. The host device 400 may change the first trim performance table TPT1 and may provide the changed first trim performance table TPT1 to the memory controller 320. The memory controller 320 may change the second trim performance table TPT2, based on the changed first trim performance table TPT1. Accordingly, even though the feature or environment of the storage device 300 changes, the QoS of each of the first to fourth namespaces NS1 to NS4 may be guaranteed.

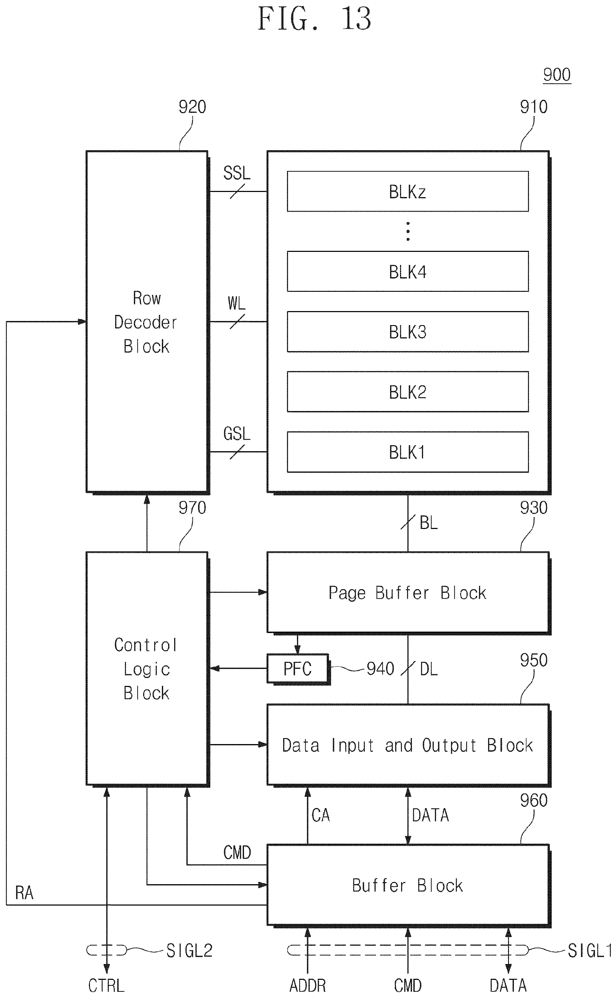

FIG. 13 is a block diagram illustrating a nonvolatile memory device 900 according to an embodiment of the present disclosure. Referring to FIG. 13, the nonvolatile memory device 900 includes a memory cell array 910, a row decoder block 920, a page buffer block 930, a pass/fail check (PFC) block 940, a data input and output block 950, a buffer block 960, and a control logic block 970.

The memory cell array 910 includes a plurality of memory blocks BLK1 to BLKz. Each of the memory blocks BLK1 to BLKz includes a plurality of memory cells. Each of the memory blocks BLK1 to BLKz may be connected to the row decoder block 920 through at least one ground selection line GSL, word lines WL, and at least one string selection line SSL. Some of the word lines WL may be used as dummy word lines. Each of the memory blocks BLK1 to BLKz may be connected to the page buffer block 930 through a plurality of bit lines BL. The plurality of memory blocks BLK1 to BLKz may be connected in common to the plurality of bit lines BL.

In an embodiment, each of the plurality of memory blocks BLK1 to BLKz may correspond to a unit of the erase operation. Memory cells belonging to each memory block may be erased at the same time. As another example, each of the memory blocks BLK1 to BLKz may be divided into a plurality of sub-blocks. Each of the plurality of sub-blocks may correspond to a unit of the erase operation.

The row decoder block 920 is connected to the memory cell array 910 through the ground selection lines GSL, the word lines WL, and the string selection lines SSL. The row decoder block 920 operates under control of the control logic block 970.

The row decoder block 920 may decode a row address RA received from the buffer block 960 and may control voltages to be applied to the string selection lines SSL, the word lines WL, and the ground selection lines GSL based on the decoded row address.

The page buffer block 930 is connected to the memory cell array 910 through the plurality of bit lines BL. The page buffer block 930 is connected to the data input and output block 950 through a plurality of data lines DL. The page buffer block 930 operates under control of the control logic block 970.

In the program operation, the page buffer block 930 may store data to be written in memory cells. The page buffer block 930 may apply voltages to the plurality of bit lines BL based on the stored data. In the read operation or in the verify read operation that is performed in the program operation or the erase operation, the page buffer block 930 may sense voltages of the bit lines BL and may store a sensing result.

In the verify read operation associated with the program operation or the erase operation, the pass/fail check block 940 may verify the sensing result of the page buffer block 930. For example, in the verify read operation that is performed in the program operation, the pass/fail check block 940 may count the number of values (e.g., the number of 0s) corresponding to on-cells that are not programmed to a target threshold voltage or higher.

In the verify read operation that is performed in the erase operation, the pass/fail check block 940 may count the number of values (e.g., the number of 1s) corresponding to off-cells that are not erased to a target threshold voltage or lower. When a counting result is greater than or equal to a threshold value, the pass/fail check block 940 may output a fail signal to the control logic block 970. When the counting result is smaller than the threshold value, the pass/fail check block 940 may output a pass signal to the control logic block 970. Depending on the verification result of the pass/fail check block 940, a program loop of the program operation may be further performed, or an erase loop of the erase operation may be further performed.

The data input and output block 950 is connected to the page buffer block 930 through the plurality of data lines DL. The data input and output block 950 may receive a column address CA from the buffer block 960. The data input and output block 950 may output the data read by the page buffer block 930 to the buffer block 960 depending on the column address CA. The data input and output block 950 may provide the data received from the buffer block 960 to the page buffer block 930, based on the column address CA.

Through the first signal lines SIGL1, the buffer block 960 may receive a command CMD and an address ADDR from an external device and may exchange data "DATA" with the external device. The buffer block 960 may operate under control of the control logic block 970. The buffer block 960 may provide the command CMD to the control logic block 970. The buffer block 960 may provide the row address RA of the address ADDR to the row decoder block 920 and may provide the column address CA of the address ADDR to the data input and output block 950. The buffer block 960 may exchange the data "DATA" with the data input and output block 950.

The control logic block 970 may exchange a control signal CTRL with the external device through second signal lines SIGL2. The control logic block 970 may allow the buffer block 960 to route the command CMD, the address ADDR, and the data "DATA". The control logic block 970 may decode the command CMD received from the buffer block 960 and may control the nonvolatile memory device 900 based on the decoded command.

In an embodiment, the nonvolatile memory device 900 may be manufactured in a bonding method. The memory cell array 910 may be manufactured by using a first wafer, and the row decoder block 920, the page buffer block 930, the pass/fail check block 940, the data input and output block 950, the buffer block 960, and the control logic block 970 may be manufactured by using a second wafer. The non-volatile memory device 900 may be implemented by coupling the first wafer and the second wafer such that an upper surface of the first wafer and an upper surface of the second wafer face each other.

As another example, the nonvolatile memory device 900 may be manufactured in a cell over peri (COP) method. A peripheral circuit including the row decoder block 920, the page buffer block 930, the pass/fail check block 940, the data input and output block 950, the buffer block 960, and the control logic block 970 may be implemented on a substrate. The memory cell array 910 may be implemented over the peripheral circuit. The peripheral circuit and the memory cell array 910 may be connected by using the through vias.

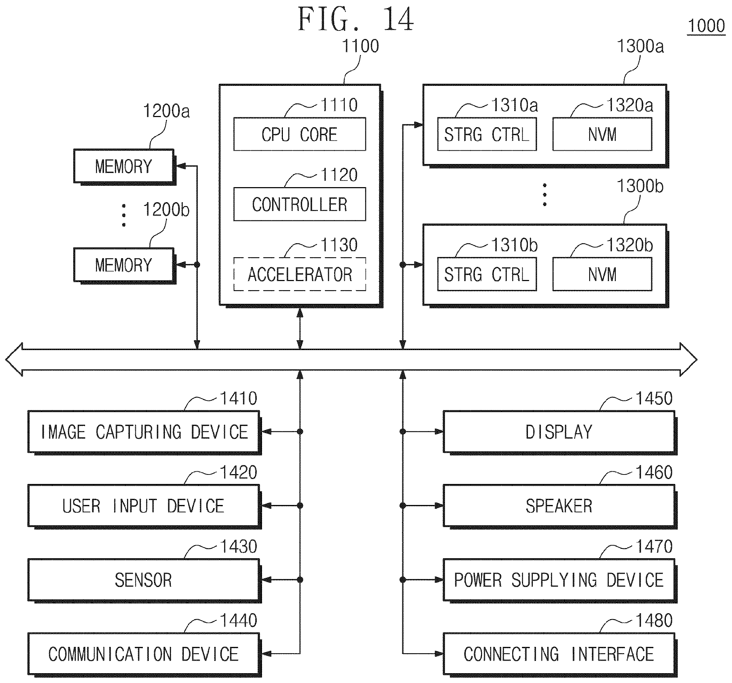

FIG. 14 is a diagram of a system 1000 to which a storage device is applied, according to an embodiment. The system 1000 of FIG. 14 may basically be a mobile system, such as a portable communication terminal (e.g., a mobile phone), a smartphone, a tablet personal computer (PC), a wearable device, a healthcare device, or an Internet of things (IOT) device. However, the system 1000 of FIG. 14 is not necessarily limited to the mobile system and may be a PC, a laptop computer, a server, a media player, or an automotive device (e.g., a navigation device).

Referring to FIG. 14, the system 1000 may include a main processor 1100, memories (e.g., 1200a and 1200b), and storage devices (e.g., 1300a and 1300b). In addition, the system 1000 may include at least one of an image capturing device 1410, a user input device 1420, a sensor 1430, a communication device 1440, a display 1450, a speaker 1460, a power supplying device 1470, and a connecting interface 1480.

The main processor 1100 may control all operations of the system 1000, more specifically, operations of other components included in the system 1000. The main processor 1100 may be implemented as a general-purpose processor, a dedicated processor, or an application processor.

The main processor 1100 may include at least one CPU core 1110 and further include a controller 1120 configured to control the memories 1200a and 1200b and/or the storage devices 1300a and 1300b. In some embodiments, the main processor 1100 may further include an accelerator 1130, which is a dedicated circuit for a high-speed data operation, such as an artificial intelligence (AI) data operation. The accelerator 1130 may include a graphics processing unit (GPU), a neural processing unit (NPU) and/or a data processing unit (DPU) and be implemented as a chip that is physically separate from the other components of the main processor 1100.

The memories 1200a and 1200b may be used as main memory devices of the system 1000. Although each of the memories 1200a and 1200b may include a volatile memory, such as static random access memory (SRAM) and/or dynamic RAM (DRAM), each of the memories 1200a and 1200b may include non-volatile memory, such as a flash memory, phase-change RAM (PRAM) and/or resistive RAM (RRAM). The memories 1200a and 1200b may be implemented in the same package as the main processor 1100.

The storage devices 1300a and 1300b may serve as non-volatile storage devices configured to store data regardless of whether power is supplied thereto, and have larger storage capacity than the memories 1200a and 1200b. The storage devices 1300a and 1300b may respectively include storage controllers(STRG CTRL) 1310a and 1310b and NVM(Non-Volatile Memory)s 1320a and 1320b configured to store data via the control of the storage controllers 1310a and 1310b. Although the NVMs 1320a and 1320b may include flash memories having a two-dimensional (2D) structure or a three-dimensional (3D) V-NAND structure, the NVMs 1320a and 1320b may include other types of NVMs, such as PRAM and/or RRAM.

The storage devices 1300a and 1300b may be physically separated from the main processor 1100 and included in the system 1000 or implemented in the same package as the main processor 1100. In addition, the storage devices 1300a and 1300b may have types of solid-state devices (SSDs) or memory cards and be removably combined with other components of the system 100 through an interface, such as the connecting interface 1480 that will be described below. The storage devices 1300a and 1300b may be devices to which a standard protocol, such as a universal flash storage (UFS), an embedded multi-media card (eMMC), or a non-volatile memory express (NVMe), is applied, without being limited thereto.

The image capturing device 1410 may capture still images or moving images. The image capturing device 1410 may include a camera, a camcorder, and/or a webcam.

The user input device 1420 may receive various types of data input by a user of the system 1000 and include a touch pad, a keypad, a keyboard, a mouse, and/or a microphone.

The sensor 1430 may detect various types of physical quantities, which may be obtained from the outside of the system 1000, and convert the detected physical quantities into electric signals. The sensor 1430 may include a temperature sensor, a pressure sensor, an illuminance sensor, a position sensor, an acceleration sensor, a biosensor, and/or a gyroscope sensor.

The communication device 1440 may transmit and receive signals between other devices outside the system 1000 according to various communication protocols. The communication device 1440 may include an antenna, a transceiver, and/or a modem.

The display 1450 and the speaker 1460 may serve as output devices configured to respectively output visual information and auditory information to the user of the system 1000.

The power supplying device 1470 may appropriately convert power supplied from a battery (not shown) embedded in the system 1000 and/or an external power source, and supply the converted power to each of components of the system 1000.

The connecting interface 1480 may provide connection between the system 1000 and an external device, which is connected to the system 1000 and capable of transmitting and receiving data to and from the system 1000. The connecting interface 1480 may be implemented by using various interface schemes, such as advanced technology attachment (ATA), serial ATA (SATA), external SATA (e-SATA), small computer small interface (SCSI), serial attached SCSI (SAS), peripheral component interconnection (PCI), PCI express (PCIe), NVMe, IEEE 1394, a universal serial bus (USB) interface, a secure digital (SD) card interface, a multi-media card (MMC) interface, an eMMC interface, a UFS interface, an embedded UFS (eUFS) interface, and a compact flash (CF) card interface.

In an embodiment, the host device 200, 400, 500, 700, or 800 may be implemented with the main processor 1100. In an embodiment, at least one of the storage devices 100, 310, 320, 330, 340, 610, and 620 described with reference to FIGS. 1 to 14 may be implemented with at least one of the storage devices 1300a and 1300b. At least one of the storage devices 1300a and 1300b may manage the performance of the trim operation based on a trip performance table. When a feature or environment of at least one of the storage devices 1300a and 1300b changes, at least one of the storage devices 1300a and 1300b may request the main processor 1100 to change the performance of the trim operation. Accordingly, at least one of the storage devices 1300a and 1300b may manage the performance of the trim operation (or the ratio of the trim operation).

In the above embodiments, components according to embodiments of the present disclosure are referenced by using blocks. The blocks may be implemented with various hardware devices, such as an integrated circuit (IC), an application specific IC (ASIC), a field programmable gate array (FPGA), and a complex programmable logic device (CPLD), firmware driven in hardware devices, software such as an application, or a combination of a hardware device and software. Also, the blocks may include circuits implemented with semiconductor elements in an integrated circuit (IC), or circuits enrolled as an intellectual property (IP).

According to embodiments of the present disclosure, a storage device may limit the performance of a trim operation depending on a request of a host device such that required performance of a write operation, a read operation, and a trim operation is guaranteed. Also, the storage device may request the host device to change a performance limit of the trim operation depending on an environment change such that the required performance of the write operation, the read operation, and the trim operation is guaranteed even though the environment changes.

While the present disclosure has been described with reference to embodiments thereof, it will be apparent to those of ordinary skill in the art that various changes and modifications may be made thereto without departing from the spirit and scope of the present disclosure as set forth in the following claims.

## Claims

1. A storage device (100) comprising:
a nonvolatile memory device (110); and
a memory controller (120) configured to control the nonvolatile memory device,
wherein pertaining to controlling the nonvolatile memory device (110), the memory controller (120) is configured to perform a write operation, a read operation, and a trim operation in response to a command of an external host device (200), and
wherein pertaining to the trim operation, the memory controller (120) is configured to:
store a trim performance table (TPT2) including a trim response time of a trim command,
perform the trim operation in response to the trim command,
transmit a trim response to the external host device (200) after the trim response time passes, even though the trim operation is completed, and
transmit a change request of the trim response time to the external host device (200) in response to detecting a trim performance change condition.

2. The storage device of claim 1, wherein the memory controller (120) is configured to (i) change the trim response time of the trim performance table in response to a setting of the external host device (200), (ii) transmit a response to the command, which includes the change request, to the external host device (200), or (iii) both.

3. The storage device of claim 1,
wherein the memory controller (120) transmits information of the trim performance change condition to the external host device (200), and
wherein the external host device (200) is configured to set the trim response time corresponding to the information of the trim performance change condition in the memory controller (120).

4. The storage device of claim 1, wherein the trim response time is associated with trim performance of the trim operation.

5. The storage device of claim 4,
wherein, as the trim response time increases, the trim performance is limited, and
wherein, as the trim response time decreases, the trim performance is improved.

6. The storage device of claim 1,
wherein the trim performance table (TPT2) includes two or more trim response times, and
wherein the two or more trim response times correspond to different trim sizes, respectively.

7. The storage device of claim 6, wherein the two or more response times are determined in units of IOPS (Input/Output Operations Per Second) or sectors.

8. The storage device of claim 1,
wherein the trim performance change condition includes an erase count, and
wherein, when the erase count is greater than a threshold value, the memory controller (120) is configured to transmit the change request to the external host device (200).

9. The storage device of claim 8, wherein, when the erase count is greater than the threshold value, the memory controller (120) is configured to transmit the change request for requesting an increase of the trim response time to the external host device (200).

10. The storage device of claim 1,
wherein the trim performance change condition includes a read-only mode, and
wherein, when the storage device (100) enters the read-only mode, the memory controller (120) is configured to transmit the change request for requesting an increase of the trim response time to the external host device (200).

11. The storage device of claim 1,
wherein the trim performance change condition includes a temperature, and
wherein, when the temperature becomes higher than a first temperature from a temperature equal to or lower than the first temperature, the memory controller (120) is configured to transmit the change request for requesting an increase of the trim response time to the external host device (200).

12. The storage device of claim 11, wherein, when the temperature decreases to the first temperature from a temperature higher than the first temperature, the memory controller (120) is configured to transmit the change request for requesting a decrease of the trim response time to the external host device (200).

13. The storage device of claim 1,
wherein the trim performance change condition includes the number of free blocks, and
wherein, when the number of the free blocks becomes greater than a threshold value from a value equal to or smaller than the threshold value, the memory controller (120) is configured to transmit the change request for requesting a decrease of the trim response time to the external host device (200).

14. The storage device of claim 13,
wherein, when the number of the free blocks decreases to the threshold value, the memory controller (120) is configured to transmit the change request for requesting a decrease of the trim response time to the external host device (200).

15. The storage device of claim **1,**
wherein the trim performance change condition includes a write and read ratio, and
wherein, when the write and read ratio becomes greater than a threshold value from a value equal to or smaller than the threshold value, the memory controller (120) is configured to transmit the change request for requesting a decrease of the trim response time to the external host device (200).
